# EUROPEAN PATENT APPLICATION

(11) **EP 3 007 293 A1**
(43) Date of publication of application: **13.04.2016**
(21) Application number: 14188103.7
(22) Date of filing: 08.10.2014
(51) Int. Cl.: H02H 7/08, H02P 29/02, H02M 1/32, G01R 31/02, H03K 17/00, H02H 5/10, H02H 7/12

(54) **Method and arrangement for verifying functional safety**

(71) Applicant: Vacon Oy, 65380 Vaasa (FI)
(72) Inventor: Aho, Eero, 33820 Tampere (FI); Alasaari, Pekka, 33540 Tampere (FI); Sihvonen, Justus, 33720 Tampere (FI); Huttunen, Teemu, 33700 Tampere (FI)
(74) Representative: Heinänen Oy Patent Agency

(57) **Abstract**

A method and an arrangement for verifying the functional safety of a signal path in a power electronics device between a control unit and a gate amplifier, which control unit generates control signals for controllable power components, and which gate amplifier generates control pulses, in response to the control signals generated by the control unit, for turning the controllable power components on and off. The control signal, generated by the control unit is transmitted through a safety unit to the gate amplifier. Safety unit generates a first test signal (TEST), which is combined to the control signal (PWM41) received from the control unit such that the logic state of this first combined control signal (PWM42) corresponds to a state wherein the controllable power component is turned on during normal operation. During the active state of the first test signal the safety unit generates a second test signal (STOP), which is combined to the first combined control signal such that the logic state of this second combined test signal (PWM43) corresponds to a state wherein the controllable power component is turned off during normal operation. During the active state of the second test signal (STOP) the safety unit measures the input signal of the gate amplifier to verify that it is in a logic state wherein the controllable power component is turned off during normal operation. The duration of the test signals are such they have no effect on the final control pulse (V_{G4}) of the power component generated by gate amplifier.

## Description

### Field of the invention

The present invention relates to a functional safety in a power electronics device. More particularly the invention is related to a run time method and arrangement for diagnosing functional safety critical components in a power electronics device, e.g. in a frequency converter driven motor drive.

### Background of the invention

The objective of the functional safety is freedom from unacceptable risk of physical injury or of damage to the health of people either directly or indirectly. In practice this means that the target of the safety design is to minimize the dangerous failure rate in the so-called safety loop, which is understood as the whole path from the actuating point (e.g. a stop button) to the final actuator (e.g. the rotating shaft of an electric motor). The target may be reached e.g. by minimizing safety critical parts or by fail-safe functions wherein all possible failures lead to a safe state. The safe state is expected to be achieved always if problems occur in the safety critical components or the safety function is activated. The safe state of a motor drive normally means that there is no torque in the motor shaft (called as safe torque off state, STO). This state is reached by stopping the power electronics device supplying the motor in a reliable way.

The principles on how to carry out safety functions are covered by international standards, e.g. the generic standard IEC61508 and the electric drive specific standard IEC61800-5-2.

The safety loop in a power electronics device can be understood to comprise three parts, where the first part is the loop from the actuating point (e.g. a stop button) to the control device that creates the control signals for the actuator, e.g. for controllable power electronic components of a frequency converter. The safety of this part may be ensured during a normal operation e.g. by signal doubling or using specified test sequences embedded in the data transfer between control devices (e.g. between a control panel and a control unit).

The end part of the safety loop in this context is understood to be the final control circuit of the main power component, e.g. the loop from a gate amplifier to an IGBT. A fault in this part is known to lead to a safe state due to that in a fault situation the controllability of at least one power component will be lost which leads e.g. to an overcurrent trip or to a fuse blow, i.e. loss of motor shaft torque. Thus, in practice this part is diagnosed continuously during a normal operation.

The problem from the functional safety point of view is the middle part of the safety loop; i.e. the part between the main controller and the control circuit of the power components. The diagnosing of this part can be done by stopping the motor drive, but normally this can be done very seldom, not during normal operation as a periodic check.

The problem of middle part safety loop monitoring has led to problems with a specific fault model in functional safety standards; a possibility to a short circuit between two adjacent tracks and pads in printed wiring boards. Therefore, fault exclusion is currently used to solve this issue. According to e.g. the standard IEC 61800-5-2 / Table D.2, one of the requirements for fault exclusion is IP54 protection class of the device.

However, the requirement of higher than otherwise necessary protection class may be problematic due to e.g. high costs.

### Summary of the invention

The object of the present invention is to avoid the problems of prior art by presenting a novel solution for periodic diagnosing the middle part safety loop during normal operation. The objective is achieved by what is stated in the independent claims, other preferred embodiments are disclosed in the dependent claims.

The invention is based on that in a special safety control block, called in this document as the safety unit, short test pulses are added to the control signals of the power components. The impact of the test pulses to the control signals is measured for ensuring safety unit's continuous ability to terminate the power stage operation in case of safe torque off request. The added pulses are so short that they have no effect on the power component operation due to the filtering delay of the gate amplifier, but their verified existence means that the final logic component, supplying the middle part safety loop, is operative.

The invention can be applied to power electronic devices wherein the power stage is based on fast switch-type components, e.g. IGBTs. The invention is defined in more detail in the present description and the following examples of embodiment. The scope of protection is defined in the independent claims and the preferred embodiments in other claims.

### Brief description of the figures

In the following, preferred embodiments of the present invention will be described in detail by reference to the enclosed drawings, wherein
Fig. 1 presents a main diagram of a speed controlled motor drive,
Fig. 2 presents safety loops in a power electronic device,
Fig. 3 presents a prior art safe stop arrangement,
Fig. 4 presents a safe stop arrangement according to the present invention, and
Fig. 5 illustrates characteristic signal diagrams of the safe stop arrangement according to the present invention.

### Detailed description of the preferred embodiments

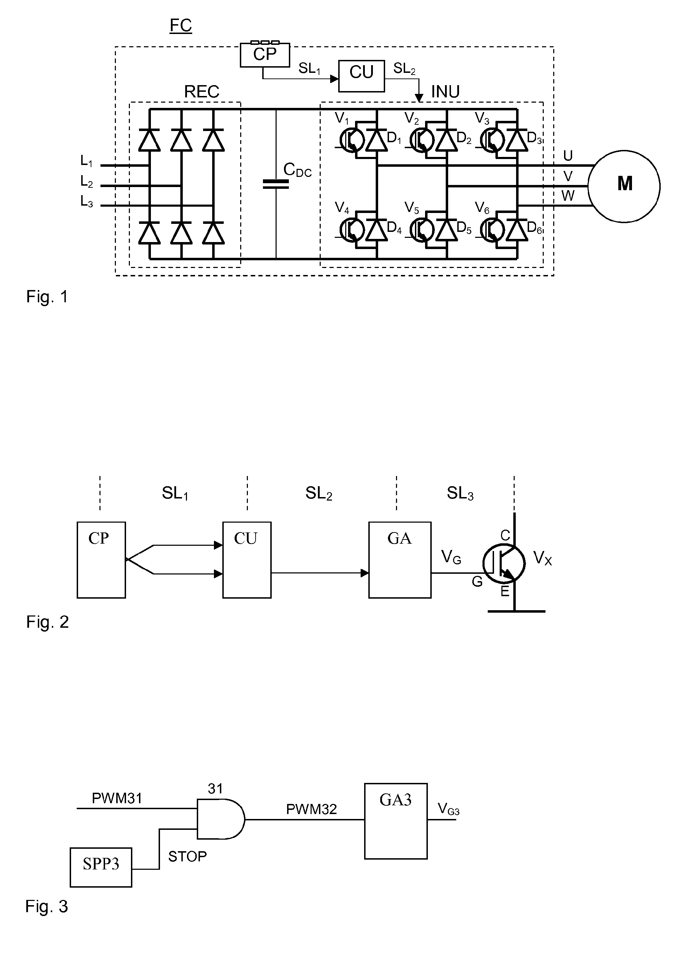

Fig. 1 presents a main diagram of a known and typical variable speed motor drive, wherein a frequency converter FC is used to control the speed of an AC motor M. The frequency converter FC contains a diode-bridge rectifier REC, rectifying the three-phase supply voltage L₁, L₂, L₃ into a constant DC-link voltage which is smoothed by a capacitor C_{DC}, a three-phase inverter unit INU, consisting of IGBT-switches V₁...V₆ and free-wheeling diodes D₁...D₆, a control panel CP and a control unit CU.

The basic function of the inverter is to create a three-phase adjustable output voltage U, V, W for the motor M. From the functional safety point of view the rotating shaft of the motor may be a source of hazard, and that is why in general all actions in a hazardous situation target on a safe torque off (STO) state which is achieved by stopping the drive, i.e. turning off all controllable power components V₁...V₆.

From the functional safety point of view the control loop from the control panel CP to the motor shaft consists of three parts, as indicated in Fig. 2:
1. SL₁ between the control panel CP and the control unit CU, used for transmitting e.g. the stop command from the user interface to the actuator, in case of Fig. 1 to the control unit of the frequency converter. The condition of this part from the functional safety point of view may be ensured e.g. by signal doubling as indicated in Fig. 2, or by short periodic test pulses in the data flow between CP and CU.
2. SL₂ between the control unit CU and the gate amplifier (GA) of the power stage. The gate amplifier generates the control pulses V_{G} for turning on and off the controllable power components V_{X}, and it normally contains also some filtering in order to avoid wrong control pulses due to possible short glitches in the control signals from CU in a noisy environment. The condition of this part from the functional safety point of view is problematic according to the prior art technology, due to that the effect of STOP command, given from the control panel, cannot be verified without stopping the drive.
3. SL₃ between the gate amplifier (GA) and the controllable power components (V₁...V₆). The normal operation of the device requires full performance of this part, thus in praxis the condition of it will be tested continuously.

Fig. 3 presents a detail in the second control loop (SL₂) according to the prior art technology. PWM31 symbolizes a control signal of a power switch, generated by the control unit CU. In order to create a functional safe stop signal PWM31 is combined with a STOP signal, generated by a safety power processor SPP3 as a response to a stop request, in a logic AND port 31 wherein the output signal PWM32 is 0 if either of its inputs is 0. PWM32 is the final control signal to the gate amplifier GA. From the functional point of view the problem is that the functionality of the logic AND circuit cannot be tested without stopping the drive. Normally this can be done very seldom in normal industrial continuous processes.

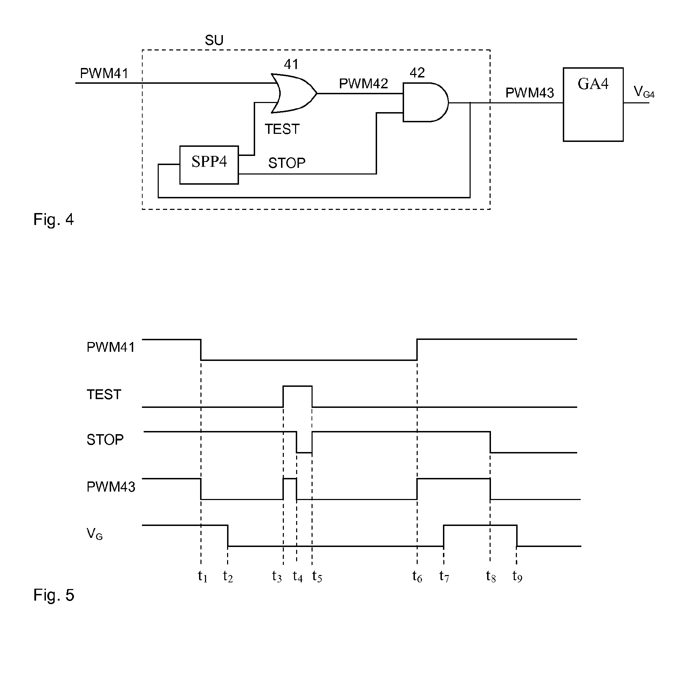

Fig. 4 presents a detail in the second control loop (SL₂) according to the present invention in a similar fashion as is presented in Fig. 3. In this case the control signal of a power switch PWM41 is transmitted through a safety unit SU to the gate amplifier GA4. The safety unit may in praxis be e.g. a logical entity on a control board or a separate safety board. Inside the safety unit the control signal PWM41 is first combined with a test signal TEST, generated by a safety power processor SPP4, in a logic OR port 41 (wherein the output signal is 1 if either of its inputs is 1) such that the state of this first combined control signal PWM42 corresponds to a state wherein the controllable power component is turned on during normal operation. Thereafter PWM42 signal is combined with a STOP signal, generated also by the safety power processor SPP4, in a logic AND port 42 (wherein the output signal is 0 if either of its inputs is 0) such that the state of this second combined control signal PWM43 corresponds to a state wherein the controllable power component is turned off during normal operation. The output signal PWM43 of the AND port 42 is then coupled to the gate amplifier GA4 and, according to the present invention, also fed back to the safety power processor SPP4 for verifying the gate amplifier input signal state.

Fig. 5 illustrates an example of the operation of a functional safety circuit according to the present invention, as presented in Fig. 4. Signal PWM41 is the normal control signal of a power component, generated by the control unit of the power electronics device. At time t₁ the control signal changes its state from logic state 1 to 0, which after a short filtering delay in the gate amplifier GA4 leads to corresponding low (turn off) state at time instant t₂.

At time instant t₃ a test pulse TEST is generated in the safety unit, which causes the PWM42 and also PWM43 signals to turn to high state (logic 1). A short time later at t₄, a low state (logic 0) STOP signal is generated, which causes also PWM43 to turn low. PWM43 logic state is measured, and if it turns to a low state essentially simultaneously with STOP, it is a mark of a working functional safety loop SL₂, because the input signal of the gate amplifier can be stopped and thus the power component turned off at any time by the safety unit. After the successful passing of this safety test the safety unit returns the test pulses TEST and STOP to the original states at time instant t₅, which causes that thereafter PWM43 follows PWM41 normally.

According to the invention the test time needed to deflect the final control pulse PWM43 from the intended state (t₃...t₄ or t₄...t₅ if the test has been performed when PWM41 is at high state) is shorter than the internal delay time (t₁...t₂) of the gate amplifier GA. By this way the test pulses have no effect on the final control pulse V_{G4}, which means that the test can be performed at any time without disturbing the normal operation.

At time instant t₆ the control signal PWM41 turns to high state and final control pulse V_{G} follows after a delay at t₇ turning on a power component. At t₈ a real safe stop occurs (STOP signal turns to low state), and the final control pulse V_{G} turns to low state after a delay at t₉. All delays (t₁...t₂, t₆...t₇, t₈...t₉) in this exemplary figure are equal.

The safety test may be performed also during a high state (logic 1) of the control signal PWM41) in a similar way described above.

While the invention has been described with reference to the previous embodiment, it should be recognized that the invention is not limited to this embodiment, and many modifications and variations will become apparent to persons skilled in the art without departing from the scope and spirit of the invention, as defined in the appended claims.

## Claims

1. A method for verifying the functional safety of a signal path in a power electronics device between a control unit and a gate amplifier, which control unit generates control signals for controllable power components, and which gate amplifier generates control pulses, in response to the control signals generated by the control unit, for turning the controllable power components on and off, **characterized in that** in the method:
the control signal, generated by the control unit is transmitted through a safety unit to the gate amplifier,
the safety unit generates a first test signal (TEST), which is combined to the control signal (PWM41) received from the control unit such that the logic state of this first combined control signal (PWM42) corresponds to a state wherein the controllable power component is turned on during normal operation, and
during the active state of the first test signal the safety unit generates a second test signal (STOP), which is combined to the first combined control signal such that the logic state of this second combined test signal (PWM43) corresponds to a state wherein the controllable power component is turned off during normal operation, and
during the active state of the second test signal (STOP) the safety unit measures the input signal of the gate amplifier to verify that it is in a logic state wherein the controllable power component is turned off during normal operation, and
wherein the duration of the test signals are such they have no effect on the final control pulse (V_{G4}) of the power component generated by gate amplifier (GA4).

2. A method according to claim 1, **characterized in that** the duration from the start of the active state of the first test signal (TEST) until the start of the active state of the second test signal (STOP) is less than the time delay in the gate amplifier circuit between the active state of the input pulse (PWM43) to the turn on signal for the controllable power component (V_{G4}).

3. A method according to any previous claims, **characterized in that** the duration of the second test signal (STOP) is less than the time delay in the gate amplifier circuit between the low state of the input pulse (PWM43) to the turn off signal for the controllable power component (V_{G}).

4. A method according to any previous claims, **characterized in that** the power components of the power electronics device are based on fast switch-type components, e.g. IGBTs.

5. A method according to any previous claims, **characterized in that** the verification of the functional safety of a signal path can be performed during normal operation of the power electronics device without disturbing the normal operation of the power electronics device.

6. An arrangement for verifying the functional safety of a signal path in a power electronics device between a control unit and a gate amplifier, which control unit is configured to generate control signals for controllable power components, and which gate amplifier is configured to generate control pulses, in response to the control signals generated by the control unit, for turning the controllable power components on and off, **characterized in that**
the arrangement further comprises a safety unit and the arrangement is configured to transmit the control signal through the safety unit to the gate amplifier,
the safety unit is configured to generate a first test signal (TEST), which is configured to be combined to the control signal (PWM41) received from the control unit such that the logic state of this first combined control signal (PWM42) corresponds to a state wherein the controllable power component is turned on during normal operation, and
during the active state of the first test signal the safety unit is configured to generate a second test signal (STOP), which is configured to be combined to the first combined control signal such that the logic state of this second combined test signal corresponds to a state wherein he controllable power component is turned off during normal operation, and
during the active state of the second test signal (STOP) the safety unit is configured to measure the input signal of the gate amplifier to verify that it is in a logic sate wherein the controllable power component is turned off during normal operation, and
wherein the duration of the test signals are such that they have no effect on the control pulse (V_{G4}) of the power component generated by gate amplifier (GA4).

7. An arrangement according to claim 6, **characterized in that** the duration from the start of the active state of the first test signal (TEST) until the start of the active state of the second test signal (STOP) is configured to be less than the time delay in the gate amplifier circuit between the active state of the input pulse (PWM43) to the turn on signal for the controllable power component (V_{G4}).

8. An arrangement according to claims 6 or 7, **characterized in that** the duration of the second test signal (STOP) is configured to be less than the time delay in the gate amplifier circuit between the low state of the input pulse (PWM43) to the turn off signal for the controllable power component (V_{G4}).

9. An arrangement according to any previous claims 6 - 8, **characterized in that** the power components of the power electronics device are based on fast switch-type components, e.g. IGBTs.

10. An arrangement according to any previous claims 6 - 9, **characterized in that** the arrangement is configured such that verification of the functional safety of a signal path in a power electronics device can be performed during normal operation of the power electronics device without disturbing the normal operation of the power electronics device.
